Europäisches Patentamt

European Patent Office

Office européen des brevets

(11) Publication number: **0 487 131 A1**

# EUROPEAN PATENT APPLICATION

(21) Application number: 91202914.7

(22) Date of filing: 09.11.91

(51) Int. Cl.5: **B60R 9/12**

(30) Priority: **20.11.90 IT 2211290**

(43) Date of publication of application:
**27.05.92 Bulletin 92/22**

(84) Designated Contracting States:
**AT BE CH DE ES FR GB IT LI LU NL SE**

(71) Applicant: MOMO S.p.A.
Via Ciro Menotti, 11
I-20129 Milan(IT)

(72) Inventor: Cattaneo, Marco
Via Frank, 32
I-27100 Pavia(IT)

(74) Representative: Mittler, Enrico et al
c/o Marchi & Mittler s.r.l. Viale Lombardia, 20
I-20131 Milano(IT)

(54) Ski carrier for motor vehicles with an arrangement for safeguarding against accidental opening.

(57) The ski carrier comprises two lower arm halves (1) and two upper arm halves (10) which are hingedly connected together at coincident inward ends (2, 23) and which are provided at respective outward ends (3, 21) with resilient U-shaped blade members (9, 27) which in the closure position of the upper arm halves (10) to the lower arm halves (1) are firmly engaged together. One (27) of said blade members (9, 27) is separable from the other blade member (9) by means of a disengagement pushbutton (25) to permit rotary movement of the upper arm half (10) with respect to the lower arm half (1).

Fig.2

The present invention relates to a ski carrier for motor vehicles with an arrangement for safeguarding against accidental opening.

Known types of ski carriers which are currently in use comprise two lower elongate arm halves which are aligned with each other at respective central ends thereof.

The lower arm halves are hingedly coupled at their central ends to corresponding upper arm halves which are caused to rotate with respect to the respective lower arm halves by resilient biasing means associated with the hinges.

Elements for fixing to the roof of the motor vehicle are fitted to the free ends of the lower arm halves.

Elements for locking engagement with the lower arm halves are fitted to the free ends of the upper arm halves.

Still in accordance with the known art, the engagement between the lower and upper arm halves, with the locking device released, is rather precarious and it can therefore easily happen that, upon even minor jolting of the motor vehicle, caused by an irregularity in the road surface, the upper arm halves become disengaged from the lower arm halves and the ski carrier opens, with the resulting possibility of losing the load.

The aim of the present invention is that of providing a ski carrier which, while having the lock in the released position, guarantees solid engagement as between the lower and upper arm halves.

In accordance with the invention that aim is achieved by means of a ski carrier comprising two feed lower arm halves which are aligned with each other, two upper arm halves which are rotatably coupled to said lower arm halves at coincident inward ends of said arm halves, resilient means capable of resiliently urging the upper arm halves in rotation from a closure position adjacent to the respective lower arm halves to an open position of being moved away from said lower arm halves, said lower arm halves being provided at one of their outward ends with an element for fixing to the roof of a motor car, said upper arm halves being provided at a corresponding one of their outward ends with an element for engagement with the respective lower arm half which is provided with a disengagement pushbutton with a locking blocking device, characterised in that provided at said outward ends of said lower and upper arm halves are first and second resilient U-shaped blade members in inverted relationship which with the upper arm halves in the closure position are firmly engaged together but which can be actuated, with the lock released, by virtue of pressing said pushbutton, to provide for disengagement of said upper arm halves with respect to said lower arm halves for consequential rotation of the upper arm halves into the open position.

In that way the presence of the blade members ensures that the engagement between the lower and upper arm halves is maintained, although the lock is released, even when travelling over particularly rough roads. At the same time, simply by pressing the pushbutton with the lock unlocked, possibly in combination with a slight pressure applied to the upper arm halves, it is possible to disengage the two blade members from each other and permit the ski carrier to be opened as desired.

The features of the present invention will be more clearly apparent from a practical embodiment thereof illustrated by way of non-limiting example in the accompanying drawings in which:

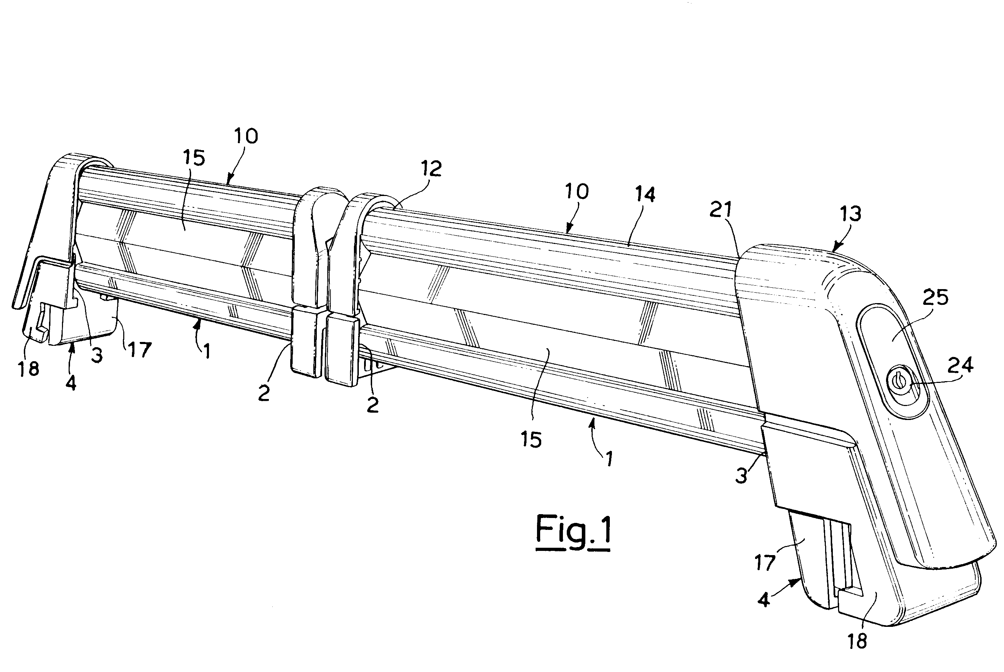

Figure 1 is a perspective view of a ski carrier according to the present invention,

Figure 2 is a view in longitudinal section of half the ski carrier in the closure position with the lock in the locked condition,

Figure 3 shows the detail on an enlarged scale at the right in Figure 2, with the lock in the unlocked condition and with the disengagement pushbutton pressed in the position for opening of the ski carrier,

Figure 4 is a view in longitudinal section of half the ski carrier in the open position,

Figure 5 is a view in section taken along line V-V in Figure 2, and

Figure 6 is a view from the right of Figure 3.

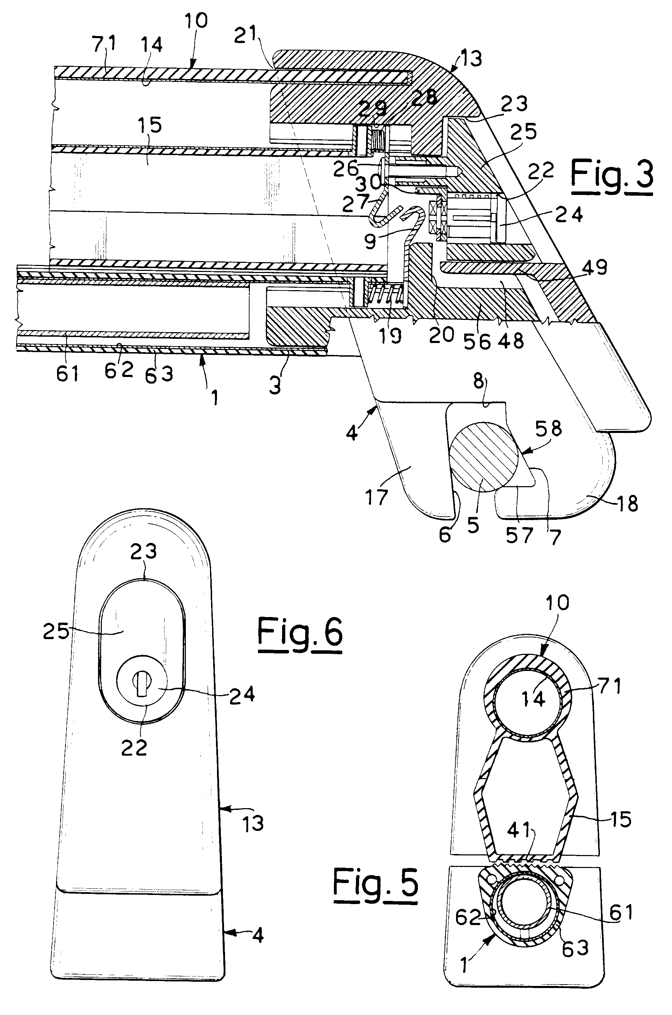

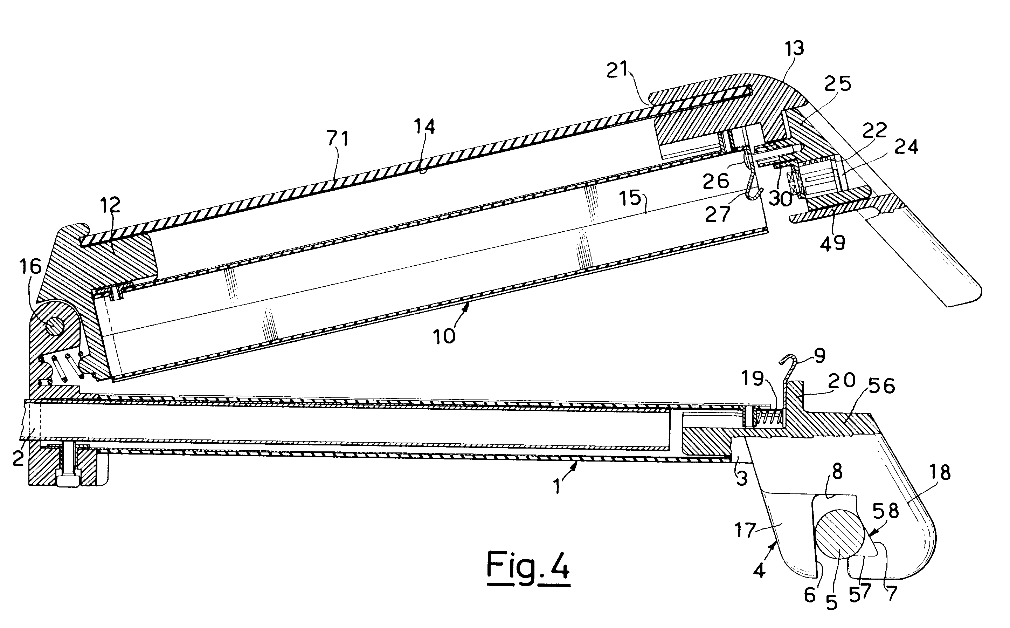

Referring to the accompanying drawings, the ski carrier according to the present invention comprises two elongate lower arm halves 1 which are aligned with each other, each one consisting of two rigid tubular bodies 61, 62 and an external rubber body 63 (see Figure 5).

Each lower arm half 1 is provided at an inward end 2 with a hinge-type coupling 16, with resilient biasing means 11, coupling it to a corresponding inward end 12 of a respective upper arm half 10.

The lower arm half 1 also has an outward end 3 on to which is fitted an element 4 for fixing to the roof of the motorcar. The element 4 is of a forked configuration with first and second jaws 17 and 18 which can be moved towards each other and away from each other by means (not shown). The first jaw 17 has an essentially vertical flat wall 6 while the second jaw 18 has an acute-angle wall 58 formed by an inclined portion 7 and a horizontal portion 57. Defined between those walls 6, 58 is a cavity 8 such as to permit the fixing 4 to be connected to a rail 5 which is fixed with respect to the roof of the motorcar.

The second jaw 18, in its upper part 56, is extended horizontally for insertion into the outward end of the lower arm half 1. The upper part 56 is also grooved or channelled in such a way as to permit a resilient means 19 to be accommodated therein. Fixed to one end of the resilient means 19 is a first U-shaped resilient blade member 9 which is urged by the resilient means 19 to bear against a reaction shoulder 20 which extends upwardly from the upper part 56.

Each upper arm half 10 extends longitudinally from its inward end 12 to a corresponding outward end 21. As shown in detail in Figure 5, it consists of a rigid tubular body 14 which is entirely encased by a tubular element 71 of rubbery material which is extended downwardly in a pair of side walls 15 which are disposed as a unit with a horizontal portion 41 in a rhombic configuration.

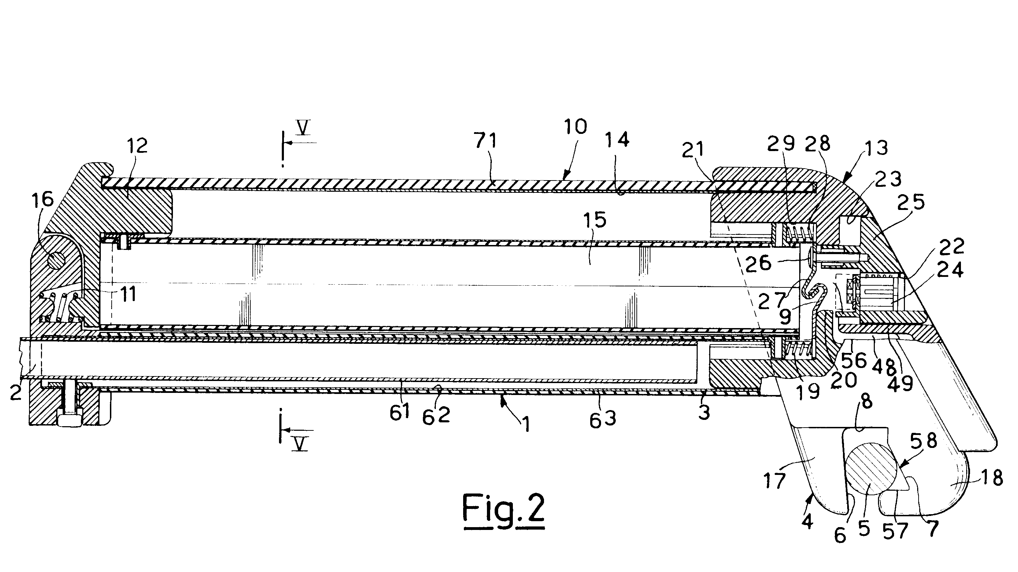

Fitted on the outward end 21 of the upper arm half 10 is an element 13 for engagement with the respective lower arm half 1. The engagement element 13 has a cavity 23 arranged to accommodate a slidable pushbutton 25 provided with a cavity 22 for accommodating a lock 24 with a rotatable locking tongue portion 30. When the lock 24 is in the closure position shown in Figure 2, that is to say with the locking tongue portion 30 prevented form sliding by virtue of bearing against the shoulder 20, the lock 24 is thus capable of causing the pushbutton 25 to be locked, preventing sliding movement thereof in the cavity 23.

Connected to the pushbutton 25 by way of a screw 26 is a second U-shaped resilient blade member 27 which is also fixed with respect to the second end of a return spring 28 accommodated in a cavity 29 and capable of causing the pushbutton 25 to return to the initial position after it has been pressed.

As illustrated in Figure 2, with the upper arm halves 10 in the closure position, the first blade member 9 is firmly engaged with the second blade member 27. A space 48 remains defined between the upper part 56 of the lower arm halves 1 and an adjacent wall 49 of the upper arm halves 10.

As shown in broken line in Figure 2, with the lock 24 released, that is to say with the locking tongue portion 30 no longer in engagement with the shoulder 20, the engagement between the blade members 9 and 27 prevents accidental opening of the ski carrier until the time at which, as shown in Figure 3, the second blade member 27 is caused by the pushbutton 25 to move back with respect to the first blade member 9 and, in combination with a slight pressure applied to the upper arm half 10 to cause a slight movement downwardly permitted by the space 48, to be disengaged therefrom, causing disengagement of the upper arm half 10 from the lower arm half 1 and consequential rotary movement of the upper arm half 10 with respect to the lower arm half 1 under the force of the spring 11, with consequential opening of the ski carrier.

## Claims

1. A ski carrier for motor vehicles comprising two fixed lower arm halves (1) which are aligned with each other, two upper arm halves (10) which are rotatably coupled to said lower arm halves (1) at coincident inward ends (2, 12) of said arm halves (1, 10), resilient means (11) capable of resiliently urging the upper arm halves (10) in rotation from a closure position adjacent to the respective lower arm halves (1) to an open position of being moved away from said lower arm halves (1), said lower arm halves (1) being provided at one of their outward ends (3) with an element (4) for fixing to the roof of a motorcar, said upper arm halves (10) being provided at a corresponding one of their outward ends (21) with an element (13) for engagement with the respective lower arm half (1) which is provided with a disengagement pushbutton (25) with a locking blocking device (24), characterised in that provided at said outward ends (3, 21) of said lower and upper arm halves (1, 10) are first and second resilient U-shaped blade members (9, 27) in inverted relationship which with upper arm halves (10) in the closure position are firmly engaged together but which can be actuated, with the lock (24) released, by virtue of pressing said pushbutton (25), to provide for disengagement of said upper arm halves (10) with respect to said lower arm halves (1) for consequential rotation of the upper arm halves (10) into the open position.

2. A ski carrier according to claim 1 characterised in that said first resilient blade member (9) is urged by a spring (19) into a position of bearing against a wall (20) which rises from an upper part (56) of the fixing element (4) and that provided in said engagement element is a return spring (28) capable of causing the pushbutton (25) to return to the initial position after pressing thereof.

3. A ski carrier according to claim 1 characterised in that free spaces (48) are defined between said outward ends (3, 21) of said lower and upper arm halves (1, 10), said free spaces (48) being such as to permit a slight pressing movement of the upper arm halves (10) with respect to the lower arm halves (1) to facilitate disengagement of said blade members (9, 27) under the control of said pushbutton (25).

Fig.1

Fig.2

Fig.3

Fig.6

Fig.5

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 395 863 (LA PREALPINA S.A.S.)<br>* figures 1-4 *<br>* page 1, line 1 - line 38 *<br>* page 3, line 12 - page 4, line 17 *<br>* page 5, line 7 - line 25 *<br>--- | 1 | B60R9/12 |
| A | US-A-4 735 350 (KAMAYA)<br>* figures 1-5 *<br>* abstract *<br>* column 2, line 1 - column 4, line 9 *<br>--- | 1,2 | |
| A | EP-A-0 206 047 (TITTEL EBERHARD)<br>* figures 1,2 *<br>* abstract *<br>* page 5, line 1 - line 29 *<br>--- | 1,2 | |
| A | DE-A-3 546 220 (HERWIG DIETMAR)<br>* figures 1-3,4B *<br>* abstract *<br>* column 4, line 19 - line 61 *<br>* column 5, line 15 - line 27 *<br><br>----- | 1-3 | TECHNICAL FIELDS SEARCHED (Int. Cl.5)<br><br>B60R |

The present search report has been drawn up for all claims

| Place of search | Date of completion of the search | Examiner |
|---|---|---|
| THE HAGUE | 17 MARCH 1992 | D'SYLVA C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)